# EUROPÄISCHE PATENTANMELDUNG

(11) **EP 1 967 577 A1**
(43) Veröffentlichungstag der Anmeldung: **10.09.2008**
(21) Anmeldenummer: 08101523.2
(22) Anmeldetag: 12.02.2008
(51) Int. Cl.: C11D 3/33, C11D 3/39, D21C 9/10, C02F 1/72

(54) **Katalysierte Peroxidbleiche ("Katalysator-Bleiche")**

(30) Priorität: 13.02.2007 DE 102007006908
(71) Anmelder: CHT R. BEITLICH GmbH, 72072 Tübingen (DE)
(72) Erfinder: Bachus, Herbert, 72379 Hechingen (DE); Dörfler, Christian, 72127 Kusterdingen (DE); Horrer, Bernd, 72124 Pliezhausen (DE)
(74) Vertreter: Jönsson, Hans-Peter

(57) **Zusammenfassung**

Die Erfindung betrifft den Einsatz des biologisch abbaubaren Komplexbildners Iminodibernsteinsäure (IDS) in Bleichverfahren mit Wasserstoffperoxid, die als Katalysator Mangan-Komplexe insbesondere von Triazacyclononanonen verwenden.

## Beschreibung

Die Erfindung betrifft den Einsatz des biologisch abbaubaren Komplexbildners Iminodibernsteinsäure (IDS) in Bleichverfahren mit Wasserstoffperoxid, die als Katalysator Mangan-Komplexe insbesondere von Triazacyclononanonen verwenden.

Wasserstoffperoxid stellt eines der wichtigsten heutigen Bleichmittel dar, welches bei der Anwendung in Wasser und Sauerstoff zerfällt. Im Gegensatz zu chlorhaltigen Bleichmitteln entstehen keine toxischen oder cancerogenen halogenhaltigen Stoffe. Somit setzt es sich in vielen industriellen Bereichen immer weiter durch. Als typische Anwendungsgebiete für Wasserstoffperoxid seien die Papier- und Zellstoffindustrie, die Textilveredlung oder auch Haushaltswaschmittel genannt, wo sich Wasserstoffperoxid beim Auflösen von Perboraten oder Percarbonaten bildet. Pro Jahr werden 2.200.000 Tonnen Wasserstoffperoxid produziert, 50% für Papier- und Zellstoff- und, 10% für Textilbleiche.

Als Nachteil von Wasserstoffperoxid werden die Notwendigkeit zur Aktivierung durch Erhitzen oder Alkalizusatz sowie die bei dieser Art der Aktivierung ablaufende Hauptreaktion des Zerfalls zu bleichunwirksamen Sauerstoff angesehen, so dass nur ein kleiner Teil der Bleichkraft umgesetzt werden kann.

Die Patentliteratur beschreibt viele Aktivatoren und Katalysatoren, die hier Verbesserung versprechen. In Haushaltswaschmitteln haben sich Aktivatoren durchgesetzt, die mit Wasserstoffperoxid Persäuren bilden, welche bei niedriger Temperatur bereits bleichend wirken.

Da solche Aktivatoren stöchiometrisch wirken, entstehen hohe Kosten sowie eine hohe zusätzliche CSB-Belastung (Chemischer Sauerstoffbedarf) für das Abwasser, so dass in industriellen Prozessen Aktivatoren bis heute kaum Verwendung finden.

Katalysatoren werden dagegen nur mit geringen Stoffmengen eingesetzt. Dennoch gibt es im Bereich der Behandlung von cellulosischen Fasern wie Papier- oder Textilindustrie kaum technisch etablierte Katalysatoren für die Peroxidbleiche, siehe Angew. Chem. Int. Ed. 2006, 45, 206-222 "Applications of Transition-Metal Catalysts to Textile and Wood-Pulp Bleaching". Auf diesen Übersichtsartikel bezieht sich die Angabe weiterer Literaturstellen (Lit. XX).

Der erste Katalysator in einem kommerziellen Haushaltswaschmittel war ein zweikerniger Mangankomplex mit je einem 1,4,7-Trimethyl-1,4,7-triazacyclononanon (L), der über drei Sauerstoffbrücken verbunden ist:

[LMn^{IV}(µ-O)₃Mn^{IV}L]²⁺Y_{q} (Kat. 1)

Als Anion kann zum Beispiel Hexafluorophosphat eingesetzt werden (Y = PF₆, q = 2; Kat1 PF₆). Der Katalysator wurde 1988 erstmals von Wieghardt et al. (Lit. 29-32) beschreiben und ist bereits bei 40°C und pH-Bereichen von 9 bis 11 wirksam, wurde jedoch aufgrund von Faserschädigungen des cellulosischen Materials nach kurzer Zeit wieder vom Markt genommen.

Ein weiterer Katalysator mit höherer pH-Toleranz und Temperaturstabilität wurde ebenfalls von Wieghardt et al. (Lit. 37) beschrieben, es handelt sich dabei um ein dimer verbrücktes Triazacyclononanon-Derivat:

[Mn^{IV}Mn^{III}(µ-O)₂(µ-CH₃COO)(Me₄dtne)]²⁺ (Kat. 2)

Me₄dtne = 1,2-Bis(4,7-dimethyl-1,4,7-triazacyclonon-1-yl)ethan.

Diese Katalysatoren dienen dazu, Lauge einzusparen, da anschließend nicht neutralisiert werden muss. Bei textilen Fasermaterialien bedeuten hohe pH-Werte in Behandlungsbädern zudem eine Verschlechterung des Griffes der Ware, die auch durch nachfolgende Weichmacherzusätze nicht mehr vollständig ausgeglichen werden kann.

Ebenfalls können diese Katalysatoren Behandlungstemperaturen in der Textilbleiche von 98°C oder mehr auf z.B. 80°C absenken und dabei dennoch den erwünschten Weißeffekt erbringen. Je niederer die Behandlungstemperatur und der pH-Wert, desto geringer ist auch die Neigung von Textilien zur Lauffaltenbildung, da eine innere Weichheit der Ware erhalten bleibt.

Ein großer Nachteil der Katalysatoren sind jedoch faserschädigende Wirkungen. Die Ursache der Faserschädigung von Kat 1) liegt vermutlich darin, dass sich der Katalysator während der Anwendung in eine weniger selektive Spezies umwandelt und dabei die entstehenden Metaboliten oder die im Endstadium auftretenden Manganionen katalytische Schädigungen verursachen. Dabei geht auch die weißgradsteigernde Wirkung des Katalysators teilweise oder völlig verloren.

In der Zellstoffbleiche ist es üblich, zur Manganentfernung vor dem Bleichen mit Wasserstoffperoxid in Vorstufen mit EDTA oder DTPA die Manganionen zu maskieren und/oder zu entfernen. Diese beiden Komplexbildner sind allerdings weder biologisch abbaubar, noch werden sie in Kläranlagen eliminiert. Da sie darüber hinaus im Verdacht stehen, ein Remobilisiervermögen von toxischen Schwermetallen aufzuweisen und in Trinkwasserreservoiren nachgewiesen werden, ist deren Verwendung in vielen Ländern eingeschränkt oder gänzlich verboten. Dennoch dominieren EDTA und DTPA bis heute den Komplexbildnereinsatz in der Zellstoffbleiche. Diese beiden Komplexbildner ermöglichen auch eine effiziente Bleiche mit Kat 1), da sie das während des Bleichprozesses frei werdende Mangan aus dem Katalysator binden und dadurch die peroxidzersetzende und baumwollschädigende Wirkung reduzieren.

WO 2007/042192 A2 beschreibt Bleichmittelzusammensetzungen, die einen definierten Mn-Katalysator, einen aminocarboxylatbasierten Komplexbildner, Wasserstoffperoxid und darüberhinaus einen Carbonat- oder Borat-Puffer enthalten. Der Puffer hält dabei den pH-Wert über einen gewissen Bereich konstant und trägt somit zu einer weiteren Stabilisierung der Bleichmittelzusammensetzungen und insbesondere der darin enthaltenen Mn-Komplexe bei. Als Komplexbildner können EDTA, HEDTA, NTA, N-Hydroxyethylaminodiessigsäure, DTPA, MGDA oder Alanin-N,N-diessigsäure zum Einsatz kommen.

Abgesehen von Puffern werden auch Amine zur Stabilisierung von Bleichmittelzusammensetzungen herangezogen, wie in DE 197 02 734 A1 beschrieben wird. Ein unabdingbarer Bestandteil der darin beschrieben Zusammensetzungen sind biologisch weitgehend abbaubare aliphatische oder alizyklische Amine mit 1 bis 12 C-Atomen; diese durchweg nur ein N-Atom enthaltenden Amine können darüber hinaus zusätzlich (auch jeweils mehrere) Hydroxylgruppen tragen. Als Komplexbildner werden in diesen Zusammensetzungen zum Beispiel Aminocarboxylate verwendet, insbesondere solche, welche eine N,N-Diessigsäuregruppierung enthalten, wie zum Beispiel EDTA, NTA, Asparaginsäure-/Glutaminsäure- oder β-Alanin-N,N-diessigsäure, Iminodiessigsäure.

Die Aufgabe der vorliegenden Erfindung besteht darin, einen ökologisch verbesserten Hilfsstoff bereitzustellen, der die katalysierte Bleiche insbesondere mit Mangan-Triazacyclononanon-Komplexen so verbessert, dass die Faserschädigung reduziert und die Bleichwirkung verbessert wird. Ein bevorzugtes Verfahren soll zudem ein All-In-Verfahren sein, wobei alle Komponenten zu Beginn der Bleiche zudosiert und nicht nachgesetzt werden sollen.

Des Weiteren soll der Katalysator insbesondere bei der Bleiche von textilen Substraten in bestehende flüssige Prozessstoffe eingearbeitet werden können, damit keine zusätzliche separate Dosierung oder das Auflösen eines Pulvers nötig wird. Dabei soll die Anwendung vereinfacht, darüber hinaus auch die Fehlermöglichkeiten eines Anwenders durch untypisch kleine Dosiermengen des Katalysators reduziert werden.

Die Erfindung betrifft in einer ersten Ausführungsform Gemische enthaltend
(a) Wasserstoffperoxid;
(b) wenigstens einen Metallkomplex auf Mangan-Basis der allgemeinen Formel I

   [LₙMnₘXₚ]^{Z}Y_{q} (I)

   worin
   L für einen Liganden eines organischen Moleküls mit einer Anzahl von Stickstoffatomen, die über seine Stickstoffatome zu dem Mangan-Zentrum (Zentren) koordinieren;
   Mn für Mangan im Oxidationszustand III oder IV;
   n und m unabhängig voneinander jeweils für eine ganze Zahl mit einem Wert von 1 bis 3;
   X für eine Koordinations- oder Brückenspezies;
   p für eine ganze Zahl mit einem Wert von 0 bis 4 ;
   z für eine Ladung des Komplexes, die eine ganze negative und positive Zahl umfasst;
   Y für ein Gegenion steht, dessen Typ der Ladung z des Komplexes abhängig ist insbesondere für PF₆⁻, und
   q = z/[Ladung Y].
   und
(c) Iminodibernsteinsäure oder deren teilweise oder vollständig neutralisierten Salze.

Komplexe der hier beschriebenen Art sind beispielsweise aus der WO 94/21777 A1 bekannt, auf die voll umfänglich insoweit Bezug genommen wird.

Unter Koordinationsspezies im Sinne der vorliegenden Erfindung werden insbesondere einzähnige Liganden verstanden. Unter dem Begriff Brückenspezies werden solche mehrzähnigen Liganden zusammengefasst, welche mindestens zwei Metallatome (verbrückend) miteinander verbinden (für eine eingehendere Erläuterung dieser Begriffe vgl. "Koordinations-Chemie" von L. Gade, Wiley-VCH 1998).

Es wurde nun gefunden, dass Iminodibernsteinsäure als biologisch abbaubarer Komplexbildner die oben genannte Aufgabe lösen kann. Überraschend ist dabei insbesondere, dass nicht auf Komplexbildner wie EDTA oder DTPA zurückgegriffen werden braucht, deren Komplexbildungskonstante um einige Größenordnungen höher ist als die von Iminodibernsteinsäure. Darüber hinaus wurde gefunden, dass der Katalysator in bestehende Hilfsstoffe eingearbeitet werden kann und dabei ausreichende Lagerstabilität aufweist.

In einer besonders bevorzugten Ausführungsform der vorliegenden Erfindung sind die Gemische dadurch gekennzeichnet, dass die Komplexe Salze
der allgemeinen Formel II

[LMn^{IV}(µ-O)₃Mn^{IV}L]²⁺Y_{q} (II)

mit
L = 1,4,7-Trimethyl-1,4,7-triazacyclononanon und/oder der allgemeinen Formel III

[Mn^{IV}Mn^{III}(µ-O)₂(µ-CH₃COO)(Me₄dtne)]²⁺ (III)

mit
Me₄dtne = 1,2-Bis(4,7-dimethyl-1,4,7-triazacyclonon-1-yl)ethan sind.

EDTA und DTPA gelten gemeinhin als stark bindende Komplexbildner für verschiedenste Metallkationen. Aufgrund der damit verbundenen sehr hohen Komplexbildungskonstanten ist das Bindungsvermögen außerordentlich stark. Mit Hilfe der vorliegenden Erfindung ist es jedoch bevorzugt, Iminodibernsteinsäure als einen Komplexbildner mit einer deutlich geringeren Komplexbildungskonstante einzusetzen, auch im Hinblick auf die damit verbundenen verbesserten Umwelteigenschaften.

Die biologische Abbaubarkeit im Sinne der vorliegenden Erfindung wird wie folgt definiert und gemessen (dabei sind neben dem erfindungsgemäßen Komplexbildner Iminodibernsteinsäure auch weitere biologisch abbaubare bzw. biologisch eliminierbare Komplexbildner aufgenommen, da Iminodibersteinsäure mit diesen später verglichen werden soll):
OECD 301-Methoden:
   Geprüft wird in diesen Methoden die leichte biologische Abbaubarkeit.
   Der Abbau wird durch periodische Messungen von DOC (Dissolved Organic Carbon), CO₂ oder O₂ bestimmt. Kriterium für eine leichte biologische Abbaubarkeit ist das Erreichen von 70% DOC-Elimination und 60% Sauerstoffverbrauch bzw. Produktion von Kohlendioxid innerhalb von 10 Tagen nach Überschreiten des Abbaugrades von 10%.
OECD 302-Methoden:
   Geprüft wird in diesen Methoden auf potentielle biologische Abbaubarkeit.

DOC, CO₂ und O₂ werden in periodischen Intervallen gemessen und in Relation zum DOC und TOC beim Beginn des Tests gesetzt. Der dadurch errechnete prozentuale Abbaugrad ergibt gegen die Zeit aufgetragen die Abbaukurve. Kriterium für eine potentielle biologische Abbaubarkeit ist das Erreichen von > 20% DOC-Abnahme bzw. Sauerstoffverbrauch nach 28 Tagen. Eine vollständige biologische Abbaubarkeit (Elimination) wird bei Werten > 70% nach 28 Tagen angenommen.

Nachfolgend Daten der hier erwähnten Produkte:
Trilon^{®} A flüssig
Versuchsmethode: OECD 302B; ISO 9888; 88/302/EWG, Teil C
Analysemethode: CSB-Abnahme
Eliminationsgrad: > 90%
Bewertung: Aus dem Wasser gut eliminierbar.
Bewertung: Das Produkt ist nach den Kriterien der OECD biologisch leicht abbaubar (readily biodegradable)

Trilon^{®} C flüssig
Versuchsmethode: OECD 302B; ISO 9888; 88/302/EWG, Teil C
Analysemethode: DOC-Abnahme
Eliminationsgrad: < 5% (28d)
Bewertung: Aus dem Wasser schlecht eliminierbar.

Trilon^{®} M flüssig
Versuchsmethode: OECD 301C; ISO 9408; 92/69/EWG, C.4-F
Analysemethode: DOC-Abnahme
Eliminationsgrad: > 90%
Bewertung: Leicht biologisch abbaubar.

Versuchsmethode : OECD 301A (neue Version)
Analysemethode: DOC-Abnahme
Eliminationsgrad: 90 - 100% (14d)
Bewertung: Leicht biologisch abbaubar.

Versuchsmethode: OECD 301F; ISO 9408; 92/69/EWG, C.4-D
Analysemethode: BSB des CSD
Eliminationsgrad: 89 %
Bewertung: Das Produkt ist nach den Kriterien der OECD biologisch leicht abbaubar (readily biodegradable).

Trilon^{®} P flüssig
Versuchsmethode: ISO 18749
Analysemethode: DOC-Abnahme
Eliminationsgrad: > 70%
Bewertung: Aus dem Wasser gut eliminierbar.

Baypure^{®} CX 100
Versuchsmethode: OECD 301E; OECD-Screening-Test (modifiziert)
Analysemethode: DOC-Abnahme
Eliminationsgrad : 79%
Bewertung: Das Produkt ist nach den Kriterien der OECD biologisch leicht abbaubar (readily biodegradable).

Die oben definierten Komponenten (a), (b) und (c) können in den verschiedensten Mengenanteilen in den erfindungsgemäßen Gemischen bevorzugt sein. Besonders bevorzugt im Sinne der vorliegenden Erfindung ist jedoch, das Gewichtsverhältnis der Komponente (a) zur Komponente (b) im Bereich von 100:1 bis 5000:1 einzustellen, insbesondere innerhalb eines Bereiches von 300:1 bis 2000:1 mit den Vorteilen von höherem Weißgrad bei akzeptabler Faserschädigung. Die Komponente (a) umfasst hier und in den weiteren Abschnitten der Beschreibung und den Patentansprüchen jeweils eine 35 Gew.-%ige wässrige Lösung von Wasserstoffperoxid.

Die oben definierten Komponenten (a), (b) und (c) können in den verschiedensten Mengenanteilen in den erfindungsgemäßen Gemischen bevorzugt sein. Besonders bevorzugt im Sinne der vorliegenden Erfindung ist jedoch, das Gewichtsverhältnis der Komponente (a) zur Komponente (c) im Bereich von 5:1 bis 50:1einzustellen, insbesondere innerhalb eines Bereiches von 8:1 bis 20:1 mit den Vorteilen von höherem Weißgrad bei akzeptabler Faserschädigung.

Die oben definierten Komponenten (a), (b) und (c) können in den verschiedensten Mengenanteilen in den erfindungsgemäßen Gemischen bevorzugt sein. Besonders bevorzugt im Sinne der vorliegenden Erfindung ist jedoch, das Gewichtsverhältnis der Komponente (b) zur Komponente (c) im Bereich von 20:1 bis 500:1einzustellen, insbesondere innerhalb eines Bereiches von 80:1 bis 300:1 mit den Vorteilen von höherem Weißgrad bei akzeptabler Faserschädigung.

Überraschenderweise können als Hilfsstoffe, zu dem der Katalysator eingemischt werden kann, für kurzzeitigen Verbrauch der Komplexbildner Iminodibernsteinsäure selbst oder im Falle von Textilbehandlung Standard-Waschmittel verwendet werden.

Überraschenderweise ist die Löslichkeit im Waschmittel ausreichend und die Lagerfähigkeit bei 25°C beträgt sogar mehrere Monate.

Ebenfalls ist es überraschend, dass die erfindungsgemäßen Gemische keine Puffersubstanzen, insbesondere keine auf Boraten und/oder Carbonaten basierende Puffersubstanzen zur Stabilisierung der in diesen Gemischen enthaltenden Mangankomplexe enthalten müssen.

Auch ist es für die Effektivität der erfindungsgemäßen Bleichmittelgemische nicht notwendig, das diese zur weiteren Stabilisierung der Mangankomplexe (abgesehen von den darin als Liganden enthaltenden Triacacylononanen) weitere Mono-, Di- oder Trialkylamine enthalten müssen, wie dies in DE 197 02 734 A1 beschrieben ist.

Die Abwesenheit solcher zusätzlichen Stabilisierungsmittel, d.h. Puffersubstanzen und/oder zusätzlicher (Mono-) Amine ist darüber hinaus besonders bevorzugt, da es zu einer erheblichen Kostenreduzierung beiträgt und das Ansetzen der Bleichmittelzusammensetzung vereinfacht.

Überraschenderweise hat sich gezeigt, dass die Effektivität der Bleichmittelgemische durch eine zusätzliche Komponente (d) in Form von Natron- und/oder Kalilauge wesentlich gesteigert werden kann. Dementsprechend ist es besonders bevorzugt, dass die erfindungsgemäßen Gemische diese zusätzlichen alkalischen Substanzen enthalten.

Eine weitere Ausführungsform der vorliegenden Erfindung besteht in der Verwendung der Gemische wie oben definiert zur Peroxidbleiche von cellulosischen Substraten. Besonders bevorzugt bleicht man erfindungsgemäß Baumwolle oder zerfasertes Holzmaterial, beispielsweise in der Textilveredelung, der Haushaltswäsche, der Zellstoff- oder Papierbleiche. Ein anderes Einsatzgebiet der erfindungsgemäßen Gemische ist die Behandlung beziehungsweise Aufbereitung von Abwasser. Besonders bevorzugt werden alle Komponenten (a), (b) und (c) zu Beginn des Prozesses (gleichzeitig) zudosiert.

Für die Beispiele und Vergleichsbeispiele wurden ein handelsübliches Flüssigwaschmittel, Felosan^{®} NFG, und folgende Natriumsalzlösungen von Komplexbildnern verwendet:

| | |
|---|---|
| Trilon® B | EDTA-Ethylendiamintetraacetat |
| Trilon® C | DTPA-Diethylentriampentaacetat |
| Dequest® 2066 | DTPMP-Diethylentriaminpentakismethylenphosphonat |
| Trilon® A | NTA, Nitrilotriacetat |
| Trilon® M | MGDA, Methylglycindiacetat |
| Baypure® CX 100 | IDS, Iminodisuccinat |
| Trilon® P | Polyethylenimin, carboxymethyliert |

Bei den Bleichen wurde als Rohware ein handelsübliches Baumwolltrikot mit einem DP-Wert von 2298 bei einem Flottenverhältnis 1:10 in infrarotbeheizten Labomat-Bomben 20 Minuten bei 80°C behandelt, danach warm und kalt ausgewaschen und das Restperoxid, der Weißgrad und der Schädigungsfaktor bestimmt.

### Ausführungsbeispiele:

### Versuchsreihe 1

| Beispiele | | Vgl. 1 | Vgl. 2 | Vgl. 3 | Vgl. 4 | Vgl. 5 | 1 | 2 | 3 | 4 |
|---|---|---|---|---|---|---|---|---|---|---|
| Felosan® NFG | mL/L | 1 | 1 | 1 | 1 | 1 | 1 | 1 | 1 | 1 |
| Kat 1 PF6 | mg/L | | 2,8 | 2,8 | 2,8 | 2,8 | 2,8 | 2,8 | 2,8 | 2,8 |
| Trilon® B | mL/L | | | 0,2 | | | | | | |
| Trilon® C | mL/L | | | | 0,2 | | | | | |
| Dequest® 2066 | mL/L | | | | | 0,2 | | | | |
| Trilon® A | mL/L | | | | | | 0,2 | | | |
| Trilon® M | mL/L | | | | | | | 0,2 | | |
| Baypure® CX 100 | mL/L | | | | | | | | 0,2 | |
| Trilon® P | mL/L | | | | | | | | | 0,2 |
| NaOH 50 Gew.-% | mL/L | 1,3 | 1,3 | 1,3 | 1,3 | 1,3 | 1,3 | 1,3 | 1,3 | 1,3 |
| Wasserstoffperoxid 35Gew.-% | mL/L | 5 | 5 | 5 | 5 | 5 | 5 | 5 | 5 | 5 |
| spülen, warm, kalt | | | | | | | | | | |
| pH Start | | 10,8 | 10,8 | 10,9 | 10,9 | 10,8 | 10,9 | 10,8 | 10,9 | 10,9 |
| pH Ende | | 10,4 | 10,5 | 10,4 | 10,4 | 10,4 | 10,4 | 10,4 | 10,5 | 10,5 |
| | | | | | | | | | | |
| Restperoxid | % | 92 | 40 | 46 | 52 | 39 | 47 | 51 | 45 | 50 |
| WG* [Berger] | | 59 | 62 | 64 | 65 | 61 | 64 | 65 | 64 | 65 |
| Schädigungsfaktor | | <0,1 | 0,31 | <0,1 | <0,1 | 0,26 | 0,10 | <0,1 | 0,14 | <0,1 |

| | | | | | | | | | | |
|---|---|---|---|---|---|---|---|---|---|---|
| *Weißgrad | | | | | | | | | | |

Vergleichsbeispiel 1 zeigt eine nichtkatalysierte Bleiche. Das Restperoxid ist mit über 90% sehr hoch, das Bleichmittel wurde wenig verbraucht und der Weißgrad liegt bei nur 59 Berger-Einheiten.
Vergleichsbeispiel 2 zeigt die Wirkung von Kat 1) ohne Zusatz an weiteren Komplexbildnern. Der Weißgrad steigt um 3 Punkt an, allerdings steigt auch der Schädigungsfaktor auf 0,3 an.
In Vergleichsbeispielen 3 und 4 wird die Wirkung von EDTA und DTPA ersichtlich, man erhält weitere 2 bis 3 Weißpunkte, dabei bleibt die Schädigung vernachlässigbar klein.
Vergleichsbeispiel 5 demonstriert, dass selbst ein guter Schwermetallkomplexbildner wie DTPMP in solch einem All-in-Verfahren kaum positive Wirkung aufweist.

Die unter Zusatz biologisch abbaubarer beziehungsweise biologisch eliminierbarer Komplexbildner durchgeführten Beispiele 1 bis 4 zeigen alle Faserschädigungsfaktoren < 0,2. Unter diesen sticht Iminodibernsteinsäure besonders hervor, wird damit doch ein sehr hoher Weißgrad von 64 Berger bei einem geringen Peroxidüberschuss von nur 45% erzielt.

### Versuchsreihe 1.1

| Beispiele | | 1.1 | 1.2 | 1.3 | 1.4 | 1.5 | 1.6 | 1.7 |
|---|---|---|---|---|---|---|---|---|
| Felosan® NFG | mL/L | 1 | 1 | 1 | 1 | 1 | 1 | 1 |
| Kat 1 (y=PF₆⁻) | mg/L | | 2,8 | 2,8 | 2,8 | 2,8 | 2,8 | 2,8 |
| Trilon® M | mL/L | | 0,1 | 0,15 | 0,2 | | | |
| Baypure® CX 100 | mL/L | | | | | 0,1 | 0,15 | 0,2 |
| NaOH 50 Gew.-% | mL/L | 1,3 | 1,3 | 1,3 | 1,3 | 1,3 | 1,3 | 1,3 |
| Wasserstoffperoxid 35 Gew.-% | mL/L | 5 | 5 | 5 | 5 | 5 | 5 | 5 |
| spülen, warm, kalt | | | | | | | | |
| pH Start | | 10,8 | 10,8 | 10,8 | 10,8 | 10,8 | 10,9 | 10,9 |
| pH Ende | | 10,4 | 10,4 | 10,4 | 10,4 | 10,4 | 10,5 | 10,5 |
| | | | | | | | | |
| Restperoxid | % | 92 | 89 | 75 | 51 | 61 | 52 | 45 |
| WG* [Berger] | | 59 | 59 | 61 | 65 | 63 | 64 | 65 |
| Schädigungsfaktor | | <0,1 | 0,21 | 0,17 | < 0,1 | 0,15 | 0,14 | 0,13 |

| | | | | | | | | |
|---|---|---|---|---|---|---|---|---|
| *Weißgrad | | | | | | | | |

Vergleichsbeispiel 1.1 zeigt eine nicht katalysierte Bleiche. Das Restperoxid ist mit über 90% sehr hoch, das Bleichmittel wurde wenig verbraucht und der Weißgrad liegt bei nur 59 Berger-Einheiten.
Vergleichsbeispiele 1.2 bis 1.4 zeigen die Wirkung von Kat 1) unter Zusatz von unterschiedlichen Mengen an MGDA. Es wird ersichtlich, dass es bei einer Einsatzkonzentration von 0,2 mL/L ein ausreichend guter Weißgrad bei einem akzeptablen Schädigungsfaktor erzielt wird. Geringer Mengen des Komplexbildners liefern nicht den gewünschten Effekt.

Vergleichsbeispiele 1.5 bis 1.7 zeigen die positive Wirkung von IDS. Schon bei einer Einsatzmenge von 0,1 mL/L wird im Vergleich zu MDGA, bei gleicher Einsatzmenge, ein signifikant bessere Weißgrad, ein geringer Schädigungsfaktor sowie eine bessere Nutzung des eingesetzten Wasserstoffperoxid erzielt. Auch bei einer Einsatzmenge von 0,15 mL/L ist der Vorteil von IDS im Vergleich zu MGDA gegeben.

### Herstellung von lagerstabilen Tensidlösungen, die einen Katalysator enthalten:

Hierbei wird in das Waschmittel der Katalysator eingerührt und mit Essigsäure oder Ameisensäure auf den gewünschten pH-Wert eingestellt. Es entstehen intensiv rot gefärbte, klare Lösungen, die bei Temperaturen unter 25 °C über Monate stabil sind.

| | Felosan® NFG | Kat 1 PF6 | Eingestellter pH-Wert | Essigsäure 100% | Ameisensäure 85% |
|---|---|---|---|---|---|
| Tensid/Kat-Mischung 1 | 100 | 0,28 | *5,0* | x | |
| Tensid/Kat-Mischung 2 | 100 | 0,28 | *4,5* | x | |
| Tensid/Kat-Mischung 3 | 100 | 0,28 | *4,0* | | x |

### Versuchsreihe 2

| Vgl. | | Vgl. | Vgl. | | | | | | | | |
|---|---|---|---|---|---|---|---|---|---|---|---|
| Beispiele | | 6 | 7 | 5 | 6 | 7 | 8 | 9 | 10 | 11 | 12 |
| Felosan® NFG | mL/L | 1 | | 1 | 1 | | | | | | |
| Tensid/Kat-Mischung 1 | mL/L | | 1 | | | 1 | | | 1 | | |
| Tensid/Kat-Mischung 2 | mL/L | | | | | | 1 | | | 1 | |
| Tensid/Kat-Mischung 3 | mL/L | | | | | | | 1 | | | 1 |
| Kat 1 (y=PF₆⁻) | mg/L | | | 2,8 | 2,8 | | | | | | |
| Trilon® M | mL/L | | | 0,2 | | 0,2 | 0,2 | 0,2 | | | |
| Baypure® CX 100 | mL/L | | | | 0,2 | | | | 0,2 | 0,2 | 0,2 |
| NaOH 50 Gew.-% | mL/L | 1,3 | 1,3 | 1,3 | 1,3 | 1,3 | 1,3 | 1,3 | 1,3 | 1,3 | 1,3 |
| Wasserstoffperoxid 35 Gew.-% | mL/L | 5 | 5 | 5 | 5 | 5 | 5 | 5 | 5 | 5 | 5 |
| spülen, warm, kalt | | | | | | | | | | | |
| pH Start | | 10,8 | 10,8 | 10,8 | 10,9 | 10,9 | 10,9 | 10,9 | 10,9 | 10,9 | 10,7 |
| pH Ende | | 10,4 | 10,4 | 10,4 | 10,5 | 10,5 | 10,4 | 10,4 | 10,4 | 10,5 | 10,5 |
| | | | | | | | | | | | |
| Restperoxid | % | 92 | 41 | 51 | 45 | 58 | 57 | 60 | 56 | 49 | 56 |
| WG [Berger] | | 59 | 62 | 65 | 64 | 64 | 65 | 64 | 65 | 65 | 65 |
| S-Faktor | | 0 | 0,29 | <0,1 | 0,14 | <0,1 | <0,1 | <0,1 | <0,1 | <0,1 | <0,1 |

Aus den Beispielen 7 bis 12 geht hervor, dass der eingemischte Katalysator im Tensid in seiner Wirkung im Vergleich zur separaten Zugabe ins Behandlungsbad nicht schwächer geworden ist, der Schädigungsfaktor bleibt generell unter 0,1. EinVergleich der erfindungsgemäßen Iminodibernsteinsäure (Baypure^{®} CX 100) mit MCDA (Trilon^{®} M) belegt wiederum die besseren Resultate mit ersterer (durchschnittlich höherer Weißgrad und geringerer Restperoxid-Gehalt).

### Versuchsreihe 3

Hier wurde das gleiche Verfahren auf eine andere Baumwoll-Rohware angewandt. Dabei wird ersichtlich, dass das System Kat 1PF6/Tensidmischung vergleichbare Ergebnisse hinsichtlich pH-Verlauf und Weißgrad liefert.

| Beispiele | | Vgl. 8 | Vgl. 9 | Vgl. 10 | Vgl. 11 | 13 | 14 | 15 | 16 | 17 | 18 | 19 | 20 |
|---|---|---|---|---|---|---|---|---|---|---|---|---|---|
| Felosan® NFG | mL/L | 1 | 1 | 1 | 1 | 1 | 1 | 1 | 1 | | | | |
| Kat 1 (y = PF₆⁻) | mL/L | | | | | 0,26 | 0,26 | 0,26 | 0,26 | | | | |
| Baypure® CX 100 | mL/L | | | | | 0,2 | 0,2 | 0,2 | 0,2 | 0,2 | 0,2 | 0,2 | 0,2 |
| Tensid/ Kat-Mischung 2 | mL/L | | | | | | | | | 1 | 1 | 1 | 1 |
| NaOH 50% | mL/L | 0,4 | 0,8 | 1,2 | 1,6 | 0,4 | 0,8 | 1,2 | 1,6 | 0,4 | 0,8 | 1,2 | 1,6 |
| Peroxid 35% | mL/L | 5 | 5 | 5 | 5 | 5 | 5 | 5 | 5 | 5 | 5 | 5 | 5 |
| spülen, warm, kalt | | | | | | | | | | | | | |
| pH Start | | 10,6 | 11,0 | 11,2 | 11,4 | 10,6 | 11,0 | 11,5 | 11,9 | 10,4 | 11,0 | 11,3 | 11, 6 |
| pH Ende | | 9,7 | 10,1 | 10,5 | 10,8 | 9,1 | 10,1 | 10,7 | 11,0 | 9,0 | 10,2 | 10,7 | 10, 9 |
| | | | | | | | | | | | | | |
| Restperoxid | % | 73 | 92 | 94 | 95 | 49 | 44 | 52 | 52 | 55 | 47 | 66 | 63 |
| WG [Berger] | | 56 | 59 | 61 | 63 | 58 | 63 | 65 | 68 | 57 | 63 | 65 | 67 |

Dabei wird ersichtlich, dass das System Kat PF6/Tensid bei unterschiedlichem Laugeneinsatz und somit unterschiedlichem Start-pH gute Wirkung zeigt. Dabei macht es keinen Unterschied, ob der Katalysator separat zu dosiert wird oder bereits im Tensid gelöst zugesetzt wird.

## Patentansprüche

1. Gemische enthaltend
(a) Wasserstoffperoxid
(b) wenigstens einen Metallkomplex auf Mangan-Basis der allgemeinen Formel I
[LₙMnₘXₚ]^{Z}Y_{q} (I)
worin
L für einen Liganden eines organischen Moleküls mit einer Anzahl von Stickstoffatomen, die über seine Stickstoffatome zu dem Mangan-Zentrum (Zentren) koordinieren;
Mn für Mangan im Oxidationszustand III oder IV;
n und m unabhängig voneinander jeweils für eine ganze Zahl mit einem Wert von 1 bis 3;
X für eine Koordinations- oder Brückenspezies;
p für eine ganze Zahl mit einem Wert von 0 bis 4 ;
z für eine Ladung des Komplexes, die eine ganze negative und positive Zahl umfasst;
Y für ein Gegenion steht, dessen Typ der Ladung z des Komplexes abhängig ist insbesondere für PF₆⁻, und
q = z/[Ladung Y]
(c) Iminodibernsteinsäure oder deren teilweise oder vollständig neutralisierten Salze.

2. Gemische nach Anspruch 1 **dadurch gekennzeichnet, dass** die Komplexe Salze
der allgemeinen Formel II
[LMn^{IV}(µ-O)₃Mn^{IV}L]²⁺Y_{q} (II)
mit
L = 1,4,7-Trimethyl-1,4,7-triazacyclononanon und/oder
der allgemeinen Formel III
[Mn^{IV}Mn^{III}(µ-O)₂(µ-CH₃COO)(Me₄dtne)]²⁺ (III)
mit
Me₄dtne = 1,2-Bis(4,7-dimethyl-1,4,7-triazacyclonon-1-yl)ethan sind.

3. Gemische nach einem der Ansprüche 1oder 2, **dadurch gekennzeichnet, dass** das Gewichtsverhältnis der Komponente (b) zur Komponente (c) 20 : 1 bis 500 : 1. beträgt.

4. Gemische nach einem der Ansprüche 1 bis 3, **dadurch gekennzeichnet, dass** die Komponente (b) ein Prozesshilfsmittel enthält.

5. Gemische nach Anspruch 4, **dadurch gekennzeichnet, dass** das Prozesshilfsmittel ein Tensid ist.

6. Verwendung der Gemische nach einem der Ansprüche 1 bis 5 zur Peroxidbleiche von cellulosischen Substraten.

7. Verwendung nach Anspruch 6, **dadurch gekennzeichnet, dass** man Baumwolle oder zerfasertes Holzmaterial bleicht.

8. Verwendung nach Anspruch 6 oder 7, **dadurch gekennzeichnet, dass** die Gemische in der Textilveredlung, Haushaltswäsche, Zellstoff- oder Papierbleiche eingesetzt werden.

9. Verwendung der Gemische nach einem der Ansprüche 1 bis 5 zur Behandlung von Abwasser.
